Europäisches Patentamt

European Patent Office

Office européen des brevets

(11) Publication number: **0 319 260**
**A2**

# EUROPEAN PATENT APPLICATION

(21) Application number: 88311324.3

(51) Int. Cl.4: **C02F 1/46**

(22) Date of filing: 30.11.88

(30) Priority: 30.11.87 ZA 878990

(43) Date of publication of application:
07.06.89 Bulletin 89/23

(84) Designated Contracting States:
AT BE CH DE ES FR GB GR IT LI LU NL SE

(71) Applicant: WATER RESEARCH COMMISSION
710 Van der Stel Building 179 Pretorius
Street
Pretoria Transvaal Province(ZA)

(72) Inventor: Buckley, Christopher Andrew
49 Essex Grove
Westridge Durban Natal(ZA)
Inventor: Simpson, Alison Elizabeth
371 Musgrave Road
Durban Natal(ZA)

(74) Representative: Holmes, Michael John et al
Frank B. Dehn & Co. Imperial House 15-19
Kingsway
London WC2B 6UZ(GB)

(54) The removal of ammonium salts from an aqueous medium containing the salt.

(57) A process for removing an ammonium salt such as ammonium nitrate from an aqueous medium containing the salt includes the steps of:

(i) providing a membrane cell in which the anode and cathode compartments are separated from each other by an anion selective membrane,

(ii) passing the ammonium salt rich aqueous medium through the cathode compartment,

(iii) passing an alkali solution through the anode compartment of the membrane cell, the alkali solution containing cations which will form a salt with the anion of the ammonium salt, and

(iv) passing an electrical direct current through the cell thereby causing the anions of the ammonium salt in the cathode compartment to pass through the anion selective membrane into the anode compartment.

The alkali solution is preferably calcium hydroxide. The aqueous medium is typically an effluent.

Xerox Copy Centre

# THE REMOVAL OF AMMONIUM SALTS FROM AN AQUEOUS MEDIUM CONTAINING THE SALT

This invention relates to the removal of ammonium salts, particularly ammonium nitrate, from a process or effluent stream.

Ammonium salts are manufactured and used extensively in industries including those of textile finishing, pharmaceuticals, ceramics, photography, electroplating, polymers and plastics, fertilisers and explosives. Effluents discharged from these industries often contain high concentrations of the ammonium salts and discharge into the natural waterways or sewers is prohibited. Saline effluents are particularly problematic in that the increasing salinity of the rivers and water reticulation systems inhibits recycle or reuse of water. In addition, the particular nature of nitrogen containing streams and the consequences associated with their indiscriminate discharge, have resulted in the imposition of stringent nitrogen disposal standards.

Methods of overcoming the disposal problems of ammonium salt containing effluents include:

(i) algae or biological treatment resulting in the conversion of ammonium ions to nitrogen gas.

(ii) pH adjustment by addition of an alkaline substance resulting in the release of ammonia gas and the formation of a salt from the alkaline cation and ammonium anion.

(iii) spray disposal onto land.

Disadvantages of these processes include the large surface area required [in particular for (i) and (iii)], the further addition of chemicals [as in (ii)] and the formation of a final stream still containing the anion originally associated with the ammonium ion. In some cases the disposal of the anion associated with the ammonium ion may also be prohibited in terms of the discharge regulations, as for example is the disposal of the nitrate anion.

United States Patent No. 4,752,363 describes a multistage effluent treatment process, the effluent comprising an alkali metal salt or hydroxide solution which contains multivalent ions and soluble and insoluble organics and inorganics. One of the stages in the process involves electrolysis wherein the effluent is passed into the anode compartment from where the alkali metal ions are transported through a cation selective membrane into the cathode compartment. The process has application to the purification effluents produced in the bottle washing, textile and related industries.

According to the present invention a process for ammonium salt removal from an aqueous medium containing the salt includes the steps of:

(i) providing a membrane cell in which the anode and cathode compartments are separated from each other by an anion selective membrane,

(ii) passing the ammonium salt rich aqueous medium through the cathode compartment,

(iii) passing an alkali solution through the anode compartment of the membrane cell, the alkali solution containing cations which will form a salt with the anion of the ammonium salt, and

(iv) passing an electrical direct current through the cell thereby causing the anions of the ammonium salt in the cathode compartment to pass through the anion selective membrane into the anode compartment.

Figure 1 illustrates schematically an electrolysis cell for use in the invention;

Figure 2 is a flow diagram of an embodiment of the invention;

Figure 3 shows the equilibria which exist in an ammonia/ammonium system at various pH values;

Figures 4 and 5 illustrate graphically the results of two experiments.

The ammonium salt rich aqueous medium will preferably be continuously passed through one compartment of the membrane cell, typically in the form of a stream.

The cations of the alkali solution are preferably alkaline earth metal cations or other cations which form only sparingly water-soluble salts or hydroxides. Particularly suitable cations are calcium and lead. The advantages are that because of its low solubility the concentration of the cation in the alkali compartment can be controlled, and the pH can be easily maintained below 12 to 12.5. Many commercially available membranes are unstable at higher pH values. The alkali solution will typically be a carbonate or hydroxide solution. The most preferred alkali solution is a saturated calcium hydroxide solution.

The cation of the alkali solution may also be an ammonium cation particularly if the anion of the ammonium salt rich aqueous medium is a nitrate anion. In this way a purified and concentrated ammonium nitrate solution is formed in the anode compartment. This concentrated solution may either:

(i) be used in the manufacture of explosives,

(ii) be recycled back into the original process from where the dilute and impure ammonium nitrate rich aqueous medium arose.

Generally, turbulence will be maintained in the compartments to minimise precipitation build-up on the membrane in the anode compartment and to minimise ion depletion at the membrane surface in the cathode compartment.

The operation of the cell will now be described by way of example, with reference to an ammonium nitrate effluent and calcium hydroxide as alkali:

(i) the ammonium nitrate containing effluent is passed through the catholyte compartment,

(ii) an alkali solution of a sparingly soluble hydroxide (e.g. lime) is passed through the anolyte compartment,

(iii) when a current is passed through the cell, two electrode reactions occur:

At the cathode:

$$2H_2O + 2e^- \rightarrow H_2(g) + 2OH^- \qquad E^\bullet = -0,84V$$

At the anode:

$$H_2O \rightarrow 2H^+ + \tfrac{1}{2}O_2(g) + 2e^- \qquad E^\bullet = 0,99V$$

The gaseous products of these reactions are evolved from the system,

(iv) the ionic products of the electrode reactions each undergo a chemical reaction in their respective compartments,

In the catholyte, ammonia gas is formed:

$$OH^- + NH_4^+ \rightleftharpoons NH_4OH \rightleftharpoons NH_3(g) + H_2O$$

In the anolyte, neutralisation occurs:

$$H^+ + OH^- \rightleftharpoons H_2O$$

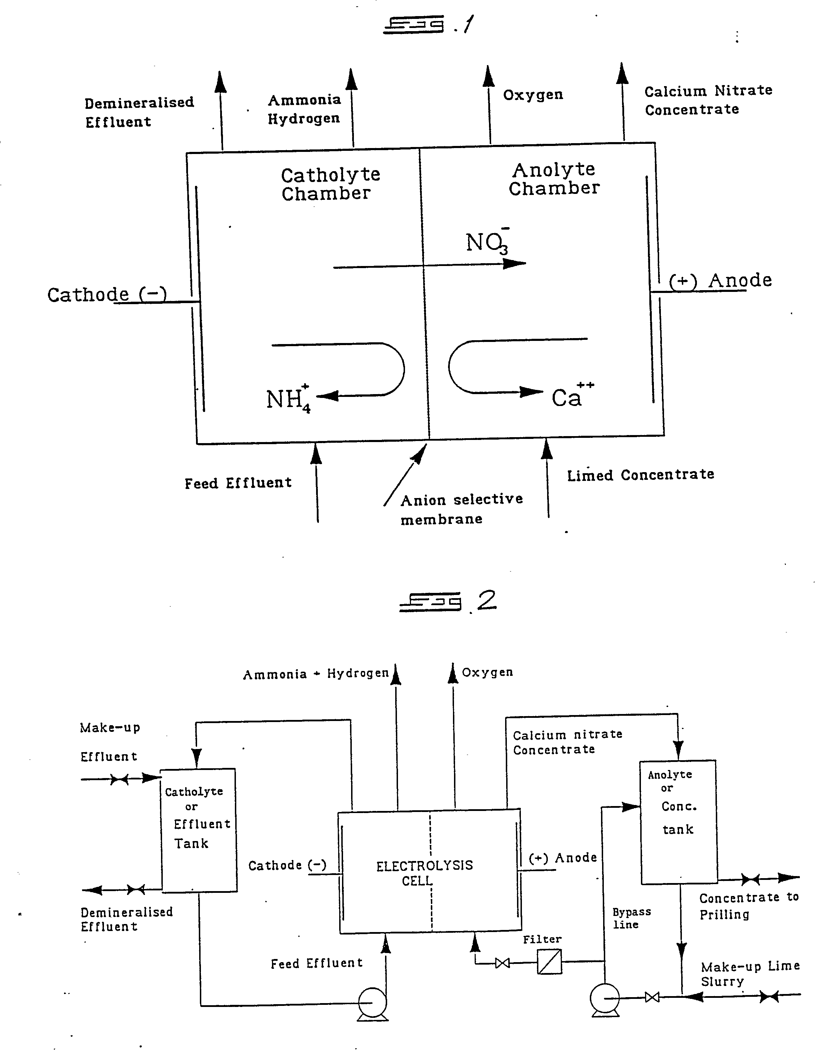

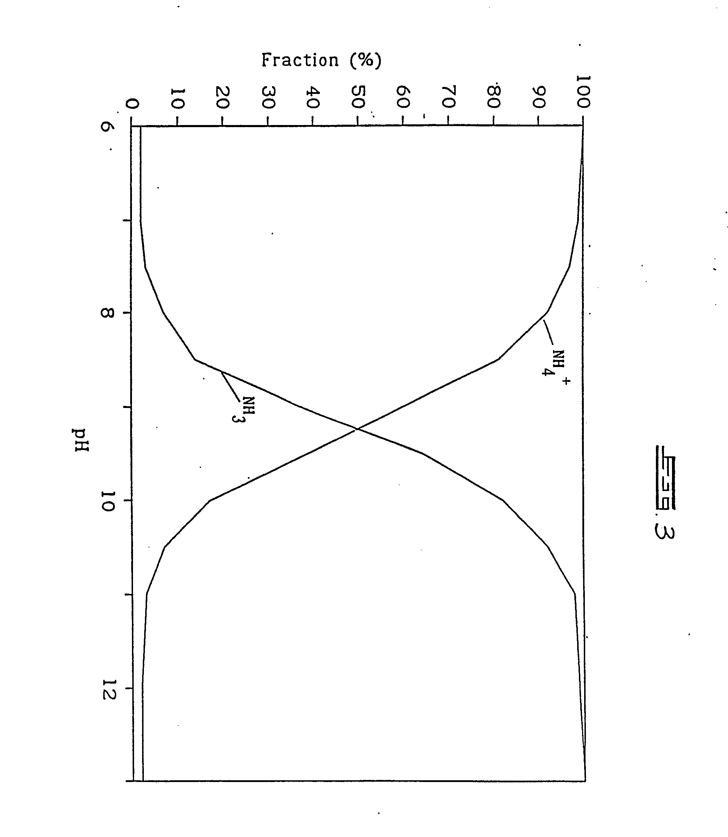

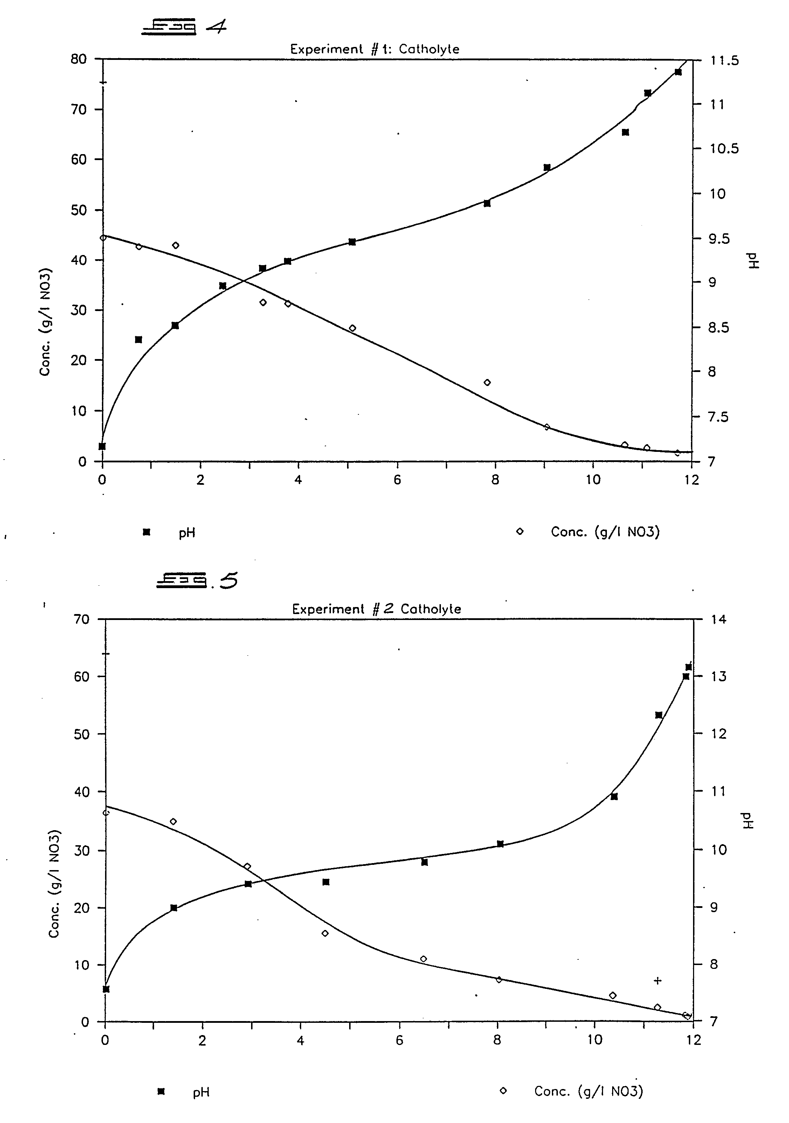

The equilibrium position of these reactions is determined by pH and temperature. Figure 3 shows the equilibria which exist in an ammonia/ammonium system at various pH values. At low pH values the predominant species is the ammonium ion. As the pH of the solution is increased ammonium hydroxide is formed and decomposes with the evolution of ammonia gas. In practice, air may also be used in addition to the evolved hydrogen to sparge the ammonia from the catholyte. In the catholyte, the pH and the temperature should be controlled such that the equilibrium lies toward the evolution of ammonia gas. In this way the effluent is depleted of ammonia species.

The electrical current passing between the electrodes is carried through the anion selective membrane by nitrate anions which originate from the feed effluent. These anions move from the catholyte, thus depleting it of nitrate ions, into the anolyte where they accumulate and associate with the alkali cation.

In practice, the calcium nitrate stream produced in the anode compartment may be recirculated with the addition of make-up lime. A concentrated calcium nitrate stream is formed and may be further concentrated by evaporation and subsequent spray drying or prilling to produce granules.

The invention may be used to remove ammonium salts from effluents or process streams which often contain a low concentration of these salts. The concentration of these salts in many effluents will not exceed 100g/litre. It has the advantage over prior art methods that:

(i) there is no undesirable build-up of additional ions in the effluent,

(ii) nitrogen removal may be achieved in relatively small plants, reducing the space requirements for treatment/disposal,

(iii) a pure concentrated solution containing the salt of the ammonium anion and alkali cation is formed,

(iv) a gas stream consisting of ammonia gas and hydrogen is produced which could be recycled back to an ammonia synthesising plant,.

(v) the ammonium salt concentration in the effluent or process stream can be reduced to a low level, e.g. 99% or more of the ammonium salt content can be removed at greater than 80% current efficiency.

For optimum performance, the current density should be controlled in the manner set out below.

Limiting Current Density

Polarisation of water at the membrane surface occurs when the rate of diffusion of the nitrate species through the boundary layer between the bulk solution and the membrane surface is not sufficient to transport the current.

3

Polarisation results in the formation of hydroxide ions and a disproportionate increase in the operating voltage of the system. The additional current will be carried by these hydroxide ions. This water splitting represents an inefficiency in the process.

The current density at which polarisation occurs is termed the limiting current density. The limiting current density of a system is a function of the ionic concentrations, the ionic mobilities and the degree of turbulence adjacent to the membrane surface.

In the operation of an electrochemical system it is desirable to control the current density close to the limiting value such that the electromembrane area requirements are minimised. Provision must be made for the decrease in limiting current density as the catholyte is depleted of ionic species.

## Current Efficiency

Each of the anion species present in the catholyte is capable of carrying a portion of the total current flowing through the membrane. The portion carried by a particular species depends upon its mobility in the solution, its mobility in the membrane structure and its concentration in the electrolytes.

The current efficiency, $\eta$ , with respect to a particular ion may be expressed as:

$$\eta \; (\%) \; = \; 100 \; x \; \frac{\text{charge transferred by specified ion}}{\text{total charge transferred}}$$

Only two electrode processes are likely to occur:
  (i) the oxidation of water at the anode to release oxygen gas and hydrogen ions.
  (ii) the reduction of water at the cathode to release hydrogen gas and hydroxide ions.

It is likely that both these reactions will proceed at 100% efficiency. The current efficiency at which ammonium hydroxide is formed in the catholyte and at which nitrates are transported to the anolyte average 80 to 100%. Factors decreasing these current efficiencies include:
  (i) the transport of $OH^-$ ions across the anion exchange membrane in place of $NO_3^-$ ions, particularly at low nitrate concentrations.
  (ii) the back-migration of small amounts of calcium ions from the anolyte to the catholyte, which occurred due to imperfect selectivity of the anion exchange membrane. These calcium ions become associated with evolved hydroxide ions, thus reducing the amount of hydroxide available for ammonium hydroxide formation.

An embodiment of the invention will now be described.

## EXAMPLE

### Apparatus

  (i) The cell consists of 2 backing plates, an anode, a cathode, 4 plastic spacing washers having a fluid flow manifold, 2 mesh-type turbulence promoters and a membrane;
  (ii) The cathode is stainless steel. The anode is titanium and is coated with a layer of a platinum group metal oxide which prevents corrosion;
  (iii) The effective membrane area is 0.112m x 0.112m = $0.0125m^2$;
  (iv) The thickness of the fluid compartments (i.e. distance between electrode plates and membrane) is about l.6mm;

(v) Typical flowrates are approximately 3ℓ/min per compartment.

METHOD

EXPERIMENT 1

(i) Catholyte holding tank was charged with approximately 20 litres of an $NH_4NO_3$ solution containing 44.5 g/ℓ ($NO_3$) [i.e. approx 57 g/ℓ $NH_4NO_3$];

(ii) Anolyte holding tank was charged with approximately 40 litres of a solution of $Ca(NO_3)_2$ at a concentration of approx 220 g/ℓ $Ca(NO_3)_2$.

NOTE: (i) Calcium nitrate was added in order to simulate the presence of a concentrated anolyte, i.e. as if many litres of effluent had already been treated.

(ii) This provides a considerable concentration gradient against which the electric current would have to transport nitrate anions through the membrane.

(iii) The anolyte was saturated with lime (pH = 9.5);

(iv) The power supply was set to supply a maximum of 9 amps or 10 volts;

(v) The experiment ran for about 40 hours during which time samples were taken regularly and the anolyte pH maintained by periodic addition of slaked lime [$Ca(OH)_2$];

(vi) The samples were analysed for pH and nitrate concentration. The results are illustrated in Figure 4.

EXPERIMENT 2

(i) Catholyte : 20 litres, ammonium nitrate concentration of 47 g/ℓ;

(ii) Anolyte : 40 litres, calcium nitrate concentration of 170 g/ℓ;

(iii) Anolyte saturated with lime (pH approx 11.5). Note that as the $Ca(NO_3)_2$ concentration is reduced, the common ion effect is weakend and $Ca(OH)_2$ disassociates to a greater extent thereby allowing a higher pH at saturation point;

(iv) The power supply was adjusted to supply a maximum of 9 or 5 volts;

(v) The experiment was run as set out in paragraph (v) for Experiment 1.

(vi) The samples were analysed for pH and nitrate concentration. The results are illustrated in Figure 5.

Discussion of the results of the two experiments

(i) Excellent removal of the nitrate ions from the catholyte, i.e. 98% removal at approximately 100% current efficiency was achieved, notwithstanding the fact that there was a high nitrate concentration in the anolyte.

(ii) The power consumption was approximately 1500 kwh/ton of ammonium nitrate removed.

(iii) To release the ammonia gas from the catholyte air sparging may be necessary.

Claims

1. A process for removing an ammonium salt from an aqueous medium containing the salt including the steps of:

(i) providing a membrane cell in which the anode and cathode compartments are separated from each other by an anion selective membrane,

(ii) passing the ammonium salt rich aqueous medium through the cathode compartment,

(iii) passing an alkali solution through the anode compartment of the membrane cell, the alkali solution containing cations which will form a salt with the anion of the ammonium salt, and,

5

(iv) passing an electrical direct current through the cell thereby causing the anions of the ammonium salt in the cathode compartment to pass through the anion selective membrane into the anode compartment.

2. A process according to claim 1 wherein the ammonium salt rich aqueous medium is continuously passed through the cathode compartment of the membrane cell.

3. A process according to claim 1 or claim 2 wherein the cations of the alkali solution form insoluble water-soluble salts or hydroxides.

4. A process according to any one of the preceding claims wherein the cations of the alkali solution are alkaline earth metal cations.

5. A process according to any one of claims 1 to 3 wherein the cations of the alkali solution are calcium or lead cations.

6. A process according to any one of the preceding claims wherein the alkali solution is a carbonate or hydroxide solution.

7. A process according to any one of the preceding claims wherein the alkali solution is calcium hydroxide.

8. A process according to any one of the preceding claims wherein the alkali solution is saturated calcium hydroxide.

9. A process according to any one of the preceding claims wherein the cation of the alkali solution is capable of forming a water-soluble salt with the anion of the ammonium salt.

10. A process according to claim 1 or claim 2 wherein the cation of the alkali solution is the ammonium cation.

11. A process according to any one of the preceding claims wherein the anion of the ammonium salt is nitrate.

12. A process according to any one of the preceding claims wherein the alkali solution is continuously passed into the anode compartment and a salt solution formed therein continuously removed from that compartment.

13. A process according to any one of the preceding claims wherein the ammonium salt rich aqueous medium is a process or effluent stream.

**Fig. 1**

**Fig. 2**

Fig. 3

**Fig 4**

Experiment #1: Catholyte

pH / Conc. (g/l NO3)

**Fig.5**

Experiment #2 Catholyte

pH / Conc. (g/l NO3)